# EUROPEAN PATENT APPLICATION

(11) **EP 2 082 925 A2**
(43) Date of publication of application: **29.07.2009**
(21) Application number: 09150678.2
(22) Date of filing: 15.01.2009
(51) Int. Cl.: B60R 21/015

(54) **A seat track position sensor**

(30) Priority: 22.01.2008 US 17475
(71) Applicant: Ford Global Technologies, LLC, Dearborn, MI 48126 (US)
(72) Inventor: Bujak, Chris, New Baltimore, MI 48047 (US); Manoharprasad, Rao, Novi, MI 48375 (US); von Eichwald, Tor c/o Volvo Cars, 422 43, Hisings Backa (SE)
(74) Representative: Messulam, Adam Clive

(57) **Abstract**

A magnetoresistive continuous seat track position sensor system to determine longitudinal movement of a seat 10 along a length of seat track 20 is described. In one embodiment, the system comprises a magnetic array 34 in a fixed position having a plurality of magnets 58, 60, 62, 64, 66, 68, 70, 72, 74, 76, 78, 80, 82 and 84 arranged along the length of the magnetic array 34. The magnets 58, 60, 62, 64, 66, 68, 70, 72, 74, 76, 78, 80, 82 and 84 have a polarity oriented at an angle relative to each other. The system further includes a magnetoresistive sensor 36 in spaced apart close proximity to the magnetic array 34, movement of the magnetoresistive sensor 36 relative to the magnetic array 34 creating a sensor output signal indicative of the longitudinal position of the seat 10 that can be used to control auxiliary safety devices 54, 56.

## Description

The present invention relates a seat track position sensor to determine a longitudinal position of a seat in a vehicle and in particular to a magnetoresistive continuous seat track position sensor.

It is an object of the invention to provide a sensor whose output can be communicated to a restraint control module and, with additional input from other safety system sensors, the action of auxiliary safety devices such as air bags and seat belt pre-tensioners can be controlled in crash events.

A magnetoresistive continuous seat track position sensor of the present invention can therefore form part of a safety system for a motor vehicle.

According to a first aspect of the invention there is provided a seat position sensor system to provide an output signal indicative of the longitudinal position of a seat along a length of a seat track characterised in that the sensor system comprises a magnetic array having a plurality of magnets arranged along a length of the magnetic array, each magnet having a polarity oriented at an angle θ relative to an adjacent magnet, the magnetic array having a width and a length along the seat track length and being in a fixed position relative to the seat track and a magnetoresistive sensor in spaced apart close proximity to the magnetic array, the magnetoresistive sensor being movable relative to the magnetic array such that the movement of the magnetoresistive sensor relative to the magnetic array creates the output signal indicative of the longitudinal position of the seat along the seat track.

The vehicle seat may have a frame with spaced apart substantially parallel lateral frame members slideably engageable with fixed, spaced apart substantially parallel seat tracks mounted to a vehicle floor, the seat (10) being longitudinally moveable along the seat tracks and the magnetic array may have a length greater than its width and may be mounted in a fixed position relative to one of the seat tracks.

The magnets arranged along the length of the array may be oriented at an angle θ proximal and distal to a midpoint.

At a midpoint of the magnetic array the magnet may be oriented perpendicular to the magnetic array and the other magnets are oriented in equal and opposite angles θ proximal and distal to the midpoint.

The sensor signal output may vary as a function of one of the sine and the cosine of the angle of direction of the magnetic field polarity at relatively high voltage, low angle of direction of the polarity of the magnetic field to a relatively low voltage, high angle of direction of the polarity of the magnetic field.

Alternatively, the sensor signal output may vary as a function of one of the sine and the cosine of the angle of direction of the magnetic field polarity at relatively low voltage, high angle of direction of the polarity of the magnetic field to a relatively high voltage, low angle of direction of the polarity of the magnetic field.

The output signal may be a voltage in the range of 0.25 volts to 4.75 volts.

When a low voltage is produced the seat may be in a first position and when a high voltage is produced the seat may be in a second position.

The longitudinal position of the seat may have a linear relationship between voltage and seat position along the magnetic array.

According to a second aspect of the invention there is provided a safety system for a motor vehicle characterised in that the safety system includes at least one seat position sensor constructed in accordance with said first aspect of the invention to provide a sensor signal receivable by a restraint control module used to determine a relative seat position within the vehicle and to control auxiliary passenger safety devices.

The safety system may further include an input to the restraint control module from at least one of a remote crash sensor, a seatbelt buckle switch and an occupant classification sensor.

The safety system may further include an input signal to the restraint control module from one or more remote crash sensors, one or more seatbelt buckle switches and one or more occupant classification sensors to control one or more seatbelt pre-tensioners and one or more vehicle occupant air bag systems.

The auxiliary safety devices may include seatbelt pre-tensioners and air bags.

The invention will now be described by way of example with reference to the accompanying drawing of which:-
FIG.1 is a schematic representation of a vehicle seat frame equipped with an array and a magnetoresistive sensor;
FIG.2 is a schematic overview of a safety system according to the present invention;
FIG.3A is a top view of a magnetic array and magnetoresistive sensor arrangement useful in the present invention;
FIG.3B is a side view of the magnetic array and magnetoresistive sensor of FIG. 3A;
FIG.4 is a detailed representation of magnets in the array of FIGS 3A and 3B showing the orientation of the direction of polarity between magnets;
FIG.5 is a graph depicting the magnetoresistive sensing performance of system comparing sensor voltage output to direction of orientation of magnets in the array; and
FIG.6 is a graph showing magnetoresistive sensor output versus seat position in the track.

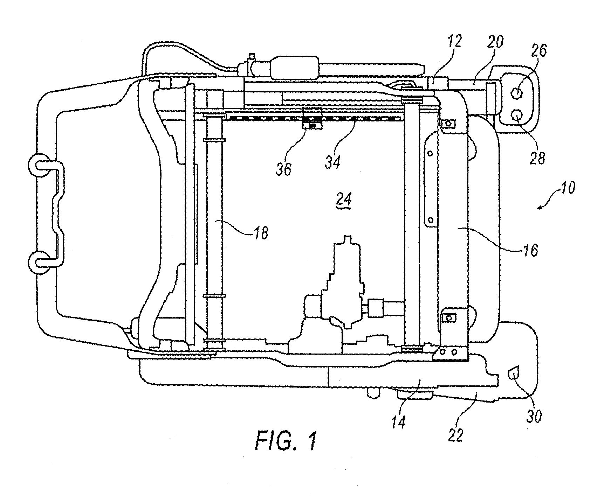

Turning now to the drawings wherein like numbers refer to like structures, Figure 1 is a detailed plan view of a seat frame useful in one embodiment of the present invention. Vehicle seat 10 is comprised of lateral, spaced apart frame members 12, 14, respectively, spaced apart by cross members 16 and 18, respectively. The seat 10 is arranged to move longitudinally along seat tracks 20, 22, mounted to a vehicle floor 24 by attachments through apertures 26, 28, and 30, respectively. The sea tracks 20, 22 are substantially parallel to each other and serve to permit the seat 10 to travel to different positions longitudinally within a vehicle compartment.

It will be appreciated that while one method of mounting the vehicle seat 10 to the vehicle floor 24 is illustrated, other methods of attaching the seat tracks 20, 22 to the floor 24 could be used.

Along at least one of the seat tracks 20, 22, or at least in close proximity to the seat track 20, 22 and substantially parallel to the seat track 20, 22, a magnetic array 34 is positioned relative to the seat and may be mounted either in the track 20, 22, or adjacent the track 20, 22.

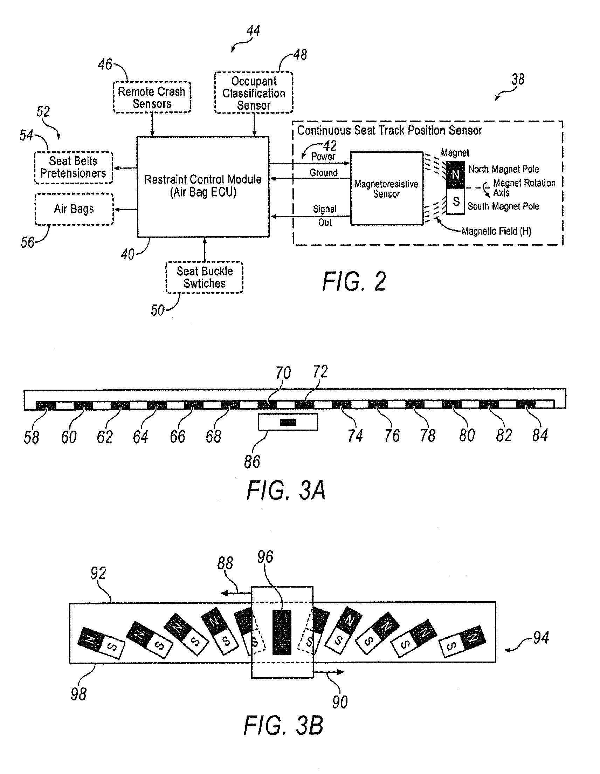

The seat 10 is equipped with a magnetoresistive sensor 36, mounted on at least one of the seat lateral frame members 12, 14 in close proximity to the magnetic array 34. In the example shown the magnetic array 34 is positioned in close proximity to the seat track 20 and the magnetic sensor is mounted on the frame member 12. Since the array 36 is affixed in position relative to the frame, the movement of the seat causes the magnetoresistive sensors 36 to move longitudinally relative to the array 34 and thereby sense changes in voltage caused by the change of direction in polarity of the individual magnets in the array as will be discussed in reference to Figures 3A and 3B.

Turning now to Figure 2, there is shown an overview of a safety system constructed in accordance with one aspect of the present invention. Specifically, system 38 is comprised of the magnetic array 34 and the magnetoresistive sensor 36 which, together with the seat 10 form the continuous seat track position system as described with reference to Figure 1.

The magnetoresistive sensor 36 is electrically connected to a remote electronic control unit (ECU), which may be a restraint control module 40, or it could be the vehicle ECU, or could be any ECU. The restraint control module may supply the magnetoresistive sensor with power as indicated at 42, and the magnetoresistive sensor sends a signal indicative of the longitudinal position of the vehicle seat within a vehicle compartment to the restraint control module. The restraint control module receives additional data signals from safety input devices 44, shown here as remote crash sensors 46, occupant classification sensors 48 and seat belt buckle switches 50. The restraint control module has a memory that may be volatile and nonvolatile, EPROM, EEPROM, Flash or any other memory, with tables resident therein wherein values for controlling auxiliary safety devices 52, shown in Fig.2 as seat belt pre-tensioners 54 and air bags 56.

It will be appreciated by those skilled in the art that it is important that all occupant information be made available to the restraint control module so that all the safety devices work together to enhance occupancy safety. For example, it is important to know the longitudinal position of a vehicle seat within a vehicle so that the air bags are inflated at the proper rate and intensity to provide maximum protection to the occupant in the seat. The input of additional data from the remote crash sensors, occupant classification sensors, and seat belt buckle switches all enhance the operation of the seat belt pre-tensioner or air bag during vehicle crash events. Values may be stored in the restraint control module tables indicative of various intensities and rates of activation for these devices based upon input to the restraint control modules, including longitudinal seat position within a vehicle during a crash event.

Figure 3A is a representation of a top view of the magnetic array 34 and magnetoresistive sensor 36. Specifically, the magnetic array 34 is comprised of a plurality of magnets 58, 60, 62, 64, 66, 68, 70, 72, 74, 76, 78, 80, 82 and 84, respectively, arranged on the array. The array has a length greater than its width. The magnetoresistive sensor 36 is mounted in a sensor holder 86, that maintains the sensor 36 in close proximity to the array 34 as it is positioned relative to the array 34 during longitudinal seat movement.

Figure 3B is a side view of the magnetic array 34 and magnetoresistive sensor 36 showing the relative direction or polarity of the individual magnets 58, 60, 62, 64, 66, 68, 70, 72, 74, 76, 78, 80, 82 and 84 in the array 34 and the two possible directions of travel 88, 90 for the magnetoresistive sensor 36. Specifically, each magnet 58, 60, 62, 64, 66, 68, 70, 72, 74, 76, 78, 80, 82 and 84 in the array 34 is arranged so that the magnetic poles of the magnets 58, 60, 62, 64, 66, 68, 70, 72, 74, 76, 78, 80, 82 and 84 are aligned at a relative angle θ with respect to each other.

Figure 3B represents an embodiment of the present invention, which corresponds to an angle of 15 degrees for the relative angle θ (theta). In this regard, the angle of direction of polarity is an acute angle at a first end 94 of the array 34 and gradually, the angle of polarity of each magnet 58, 60, 62, 64, 66, 68, 70, 72, 74, 76, 78, 80, 82 and 84 changes by the value θ relative to the adjacent magnet 58, 60, 62, 64, 66, 68, 70, 72, 74, 76, 78, 80, 82 and 84 until at a point substantially midpoint 96 of the array, the magnet is perpendicular to the longitudinal direction of travel of the vehicle seat. Thereafter, the magnets are arranged along the array at progressively greater obtuse angles toward the array end 98.

As stated earlier, the magnetoresistive sensor 36 senses the direction of polarity of the magnets 58, 60, 62, 64, 66, 68, 70, 72, 74, 76, 78, 80, 82 and 84 along the array 34 and generates a voltage that is a signal indicative of the longitudinal relative position of the seat 10 in the vehicle compartment relative to the track 20.

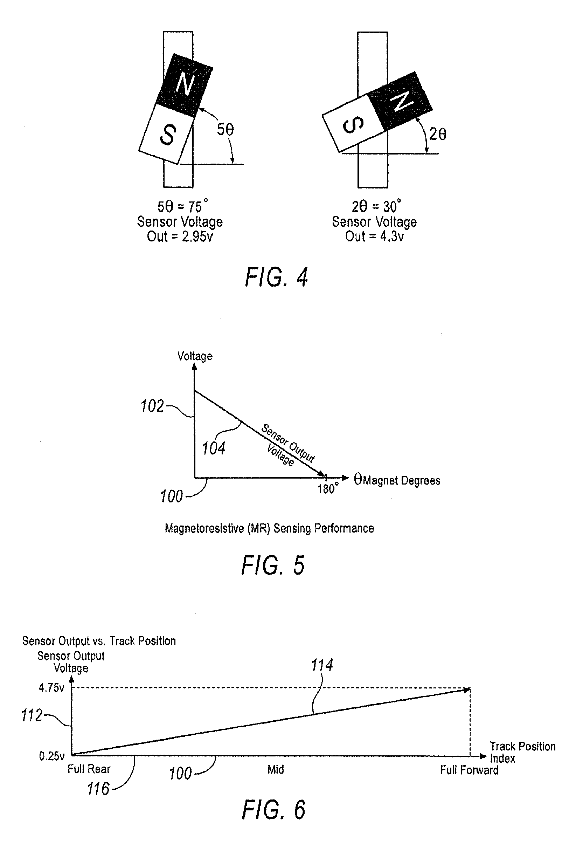

Figure 4 is a representation of two magnets in the array at different angles to indicate that changes in the angle of polarity changes the voltage produced when the magnetoresistive sensor senses the direction of polarity of the magnets in the array. As can be seen, when the angles of polarity direction is high, (i.e., 75°) the voltage generated is relatively low (i.e., 2.95 volts), and when the angle is low, (i.e., 30°) the voltage generated is relatively high (i.e., 4.3 volts). The changes in voltage as the magnetoresistive sensor travels relative to the array generates signals to the restraint control module indicative of the longitudinal position of the seat in a vehicle.

Those skilled in the art will recognize that a high angle could yield a low voltage and a low angle could yield a high voltage. The referenced voltages and angles are set forth for illustrative purposes only.

Figure 5 is a graphical representation of a magnetoresistive sensing performance of one aspect of the present invention. The x axis 100 is the angle of direction of polarity for the magnets arranged along the array and the y axis 102 is voltage. Note that in this example, the sensor signal output 104 varies as a function of the sine/cosine of the angle of direction of the magnetic field polarity at relatively high voltage low angle of direction of the polarity of the magnetic field to a relatively low voltage, high angle of direction of the magnetic field. It is understood that Figure 5 is an illustrative example, at it is possible that the senor signal output could vary as a function of the sine/cosine of the angle of direction of the magnetic field polarity at a relatively low voltage, high angle of direction of the magnetic field to a relatively high voltage, low angle of direction of the polarity of the magnetic field.

Figure 6 is a representation of the magnetoresistive seat track position in relation to voltage of the signal produced. The x axis 110 is longitudinal seat position, ranging from full rear to full forward position of the seat, and the y axis 112 is sensor output voltage. The relationship between longitudinal seat position and voltage is depicted at 114, and can be understood to be linear. When the seat 10 is in the rearward portion 116, the voltage is relatively low, and as the seat travels longitudinally toward the full forward position 118, the voltage is relatively high. In this depiction, the voltage ranges from 0.25 volts to 4.75 volts, but any range of voltages may be seen, the only limitation being that the relationship between longitudinal seat position and voltage is linear.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as set out in the appended claims.

## Claims

1. A seat position sensor system to provide an output signal indicative of the longitudinal position of a seat (10) along a length of a seat track (20) **characterised in that** the sensor system comprises a magnetic array (34) having a plurality of magnets (58, 60, 62, 64, 66, 68, 70, 72, 74, 76, 78, 80, 82 and 84) arranged along a length of the magnetic array (34), each magnet (58, 60, 62, 64, 66, 68, 70, 72, 74, 76, 78, 80, 82 and 84) having a polarity oriented at an angle θ relative to an adjacent magnet (58, 60, 62, 64, 66, 68, 70, 72, 74, 76, 78, 80, 82 and 84), the magnetic array (34) having a width and a length along the seat track length and being in a fixed position relative to the seat track (20) and a magnetoresistive sensor (36) in spaced apart close proximity to the magnetic array (34), the magnetoresistive sensor (36) being movable relative to the magnetic array (34) such that the movement of the magnetoresistive sensor (36) relative to the magnetic array (34) creates the output signal indicative of the longitudinal position of the seat (10) along the seat track (20).

2. A seat position sensor system as claimed in claim 1 wherein the vehicle seat (10) has a frame with spaced apart substantially parallel lateral frame members (12, 14) slideably engageable with fixed, spaced apart substantially parallel seat tracks (20, 22) mounted to a vehicle floor (24), the seat (10) being longitudinally moveable along the seat tracks (20, 22) and the magnetic array (34) has a length greater than its width and is mounted in a fixed position relative to one of the seat tracks (20,22).

3. A seat position sensor system as claimed in claim 1 or in claim 2 wherein at a midpoint (96) of the magnetic array (34) the magnet is oriented perpendicular to the magnetic array (34) and the other magnets are oriented in equal and opposite angles θ proximal and distal to the midpoint (96).

4. A seat position sensor system as claimed in any of claims 1 to 3 wherein the sensor signal output varies as a function of one of the sine and the cosine of the angle of direction of the magnetic field polarity at relatively high voltage, low angle of direction of the polarity of the magnetic field to a relatively low voltage, high angle of direction of the polarity of the magnetic field.

5. A seat position sensor system as claimed in any of claims 1 to 3 wherein the sensor signal output varies as a function of one of the sine and the cosine of the angle of direction of the magnetic field polarity at relatively low voltage, high angle of direction of the polarity of the magnetic field to a relatively high voltage, low angle of direction of the polarity of the magnetic field.

6. A seat position sensor system as claimed in any of claims 1 to 5 wherein the output signal is a voltage in the range of 0.25 volts to 4.75 volts.

7. A seat position sensor system as claimed in any of claims 1 to 6 wherein when a low voltage is produced the seat (10) is in a first position and when a high voltage is produced the seat (10) is in a second position.

8. A seat position sensor system as claimed in any of claims 1 to 7 wherein the longitudinal position of the seat (10) has a linear relationship between voltage and seat position along the magnetic array (34).

9. A safety system for a motor vehicle **characterised in that** the safety system includes at least one seat position sensor system as claimed in any of claims 1 to 8 to provide a sensor signal receivable by a restraint control module (40) used to determine a relative seat position within the vehicle and to control auxiliary passenger safety devices (54, 56).

10. A safety system as claimed in claim 9 wherein the safety system further includes an input to the restraint control module from at least one of a remote crash sensor (46), a seatbelt buckle switch (50) and an occupant classification sensor (48).

11. A safety system as claimed in claim 9 or in claim 10 wherein the safety system further includes an input signal to the restraint control module from one or more remote crash sensors (46), one or more seatbelt buckle switches (50) and one or more occupant classification sensors (48) to control one or more seatbelt pre-tensioners (54) and one or more vehicle occupant air bag systems (56).

12. A safety system as claimed in any of claims 9 to 11 wherein the auxiliary safety devices include seatbelt pre-tensioners (54) and air bags (56).
